**Europäisches Patentamt**

**European Patent Office**

**Office européen des brevets**

(19)

(11) Veröffentlichungsnummer: **0 123 332**
**A2**

(12) # EUROPÄISCHE PATENTANMELDUNG

(21) Anmeldenummer: **84200391.5**

(22) Anmeldetag: **20.03.84**

(51) Int. Cl.³: **G 02 B 7/26**

(30) Priorität: **23.03.83 DE 3310483**

(43) Veröffentlichungstag der Anmeldung:
**31.10.84 Patentblatt 84/44**

(84) Benannte Vertragsstaaten:
**DE FR GB IT SE**

(71) Anmelder: **Philips Patentverwaltung GmbH**
**Billstrasse 80**
**D-2000 Hamburg 28(DE)**

(84) Benannte Vertragsstaaten:
**DE**

(71) Anmelder: **N.V. Philips' Gloeilampenfabrieken**
**Groenewoudseweg 1**
**NL-5621 BA Eindhoven(NL)**

(84) Benannte Vertragsstaaten:
**FR GB IT SE**

(72) Erfinder: **Mannschke, Lothar, Dipl.-Ing.**
**Haidbuckel 23**
**D-8501 Eckental(DE)**

(74) Vertreter: **Peuckert, Hermann et al,**
**Philips Patentverwaltung GmbH Billstrasse 80 Postfach**
**10 51 49**
**D-2000 Hamburg 28(DE)**

(54) **Optischer Multiplexer und Demultiplexer.**

(57) Der Stirnfläche einer Gradienten-Index-Stablinse, gegenüber der ein Gitter liegt, sind gleichzeitig Lichtwellenleiter für Miltiplex- und Demultiplexbetrieb zugeordnet. Daraus wird ein kombinierter Multiplexer/Demultiplexer gebildet, dessen in beiden Richtungen betriebener Lichtwellenleiter zwischen den Lichtwellenleitern der Teilbereiche im Zentrum der Stirnfläche angeordnet ist.

FIG.1

EP 0 123 332 A2

0123332

Philips Patentverwaltung GmbH          PHD 83303 EP

N.V. Philips Gloeilampenfabrieken      06.02.1984

## Optischer Multiplexer und Demultiplexer

Die Erfindung betrifft einen optischen Multiplexer und Demultiplexer. Solche optischen Baugruppen werden in der optischen Nachrichtenübertragung zur Erhöhung der Nachrichtenübertragungskapazität eingesetzt.

Aus der US-PS 4 198 117 (Kobayashi) ist bereits eine sowohl als Multiplexer als auch als Demultiplexer geeignete optische Baugruppe der oben beschriebenen Art bekannt. Dort ist in einem Beispiel eine Stirnfläche einer Gradientenstablinse (GRIN-Linse) angeschrägt und mit einem Gitter versehen, während auf der gegenüberliegenden Seite außermittig eine Eingangsfaser und mehrere Ausgangsfasern positioniert sind. In einem optischen System ist zur einseitig gerichteten Übertragung über einen LWL ein Multiplexer auf der Senderseite und ein Demultiplexer empfangsseitig erforderlich. Für die Gegenrichtung sind ein weiterer LWL und weitere Baugruppen dieser Art notwendig.

Der Erfindung liegt die Aufgabe zugrunde, eine einfache und kompakt aufgebaute optische Baugruppe für beidseitig gerichtete Nachrichtenübertragung über einen einzigen Lichtwellenleiter zu schaffen, die außerdem die Mehrfachausnutzung des Lichtwellenleiters (LWL) durch Wellenlängen-Multiplex-Technik gestattet.

Diese Aufgabe wird mit einem optischen Multiplexer und Demultiplexer dadurch gelöst, daß für den Zweirichtungsbetrieb sowohl die ankommenden Lichtwellenleiter für einen Multiplexbe-trieb als auch die abgehenden Lichtwellenleiter für einen Demultiplex-Betrieb auf einer Stirnfläche (2) einer einzigen Gradienten-Index-Stablinse angeordnet sind, daß auf dem Zentrum dieser Stirnfläche ein in beiden Richtungen betriebener Lichtwellenleiter befestigt ist und daß der anderen Stirnfläche mindestens ein Gitter zugeordnet ist.

Die Erfindung wird mit weiteren, in den Unteransprüchen angegebenen vorteilhaften Ausgestaltungen anhand des in der Zeichnung schematisch dargestellten Ausführungsbeispieles näher erläutert.

Es zeigen:

Fig. 1    im Querschnitt eine Gradienten-Index-Stablinse mit Gitter und Lichtwellenleiter eines Multiplex-Demultiplexbausteines

Fig.2    in Draufsicht einen Ausschnitt der mit Lichtwellenleitern bestückten Stirnfläche der in Fig. 1 dargestellten Gradienten-Index-Stablinse

Fig. 3    in Draufsicht einen Ausschnitt der Stirnfläche einer in anderer Weise bestückten Gradienten-Index-Stablinse.

Im Schnittpunkt der optischen Achse mit der Stirnfläche 2 der GRIN-Linse 1 ist der in beiden Richtungen betriebene LWL 3 angeschlossen. Daneben, beispielsweise in der selben Ebene, liegen in Reihe die LWL 4, die zeichnerisch durch kürzer abgebrochene Stücke gegenüber dem LWL 3 unterschieden sind.

Der gegenüberliegenden Stirnfläche 5 der GRIN-Linse 1 ist ein keilförmiger Glaskörper 6 zugeordnet, auf dessen Rückseite ein reflektierendes Gitter 7 angebracht ist. Zwischen GRIN-Linse 1 und Keil 6 verbleibt ein zur Feinjustierung verwendeter, ggf. mit indexangepaßtem Material ausgefüllter Zwischenraum.

Mit gestrichelten Linien ist der vom LWL 3 kommende Strahlengang in der GRIN-Linse 1 angegeben, der je nach Wellenlänge und Gitterkonstante beispielsweise auf dem gepunktet gezeichneten Strahlenweg in einen der LWL 4 führt. Die Positionen der je einem Kanal zugeordneten LWL 4 auf der Stirnfläche 2 lassen sich mit den Abbildungseigenschaften der GRIN-Linse und den Beugungseigenschaften verwendeter Gitter berechnen.

Zur Optimierung werden sogenannte Echelette-Gitter verwendet, durch deren Glanzwinkel die Strahlung einer Wellenlänge konzentriert in eine bevorzugte Ordnung gebeugt wird. Die den LWL'n 4 zugeordneten Kanäle werden durch die jeweils übertragene Lichtwellenlänge dargestellt. Aus einem vorgegebenen Bereich werden Wellenlängengruppen für den Multiplexteil und den Demultiplexteil gebildet. Beide Teile sind in einem einzigen optischen Bauteil zusammengefaßt. Jedes System besteht aus zwei optischen Baugruppen, bei denen die Zuordnung der Wellenlängengruppen zu den Multiplex-bzw. Demultiplexteilen ausgetauscht ist.

-4-

Beispielsweise werden Kanäle mit Wellenlängen kleiner als 830 nm ausgewählt, die den Lichtwellenleitern 4 zugeordnet werden, die in der Zeichnung unterhalb des LWL 3 liegen. Diese bilden den Multiplexteil. Die Kanäle mit Wellenlängen größer als 830 nm werden den verbliebenen LWL'n 4 oberhalb des LWL 3 zugeordnet, die den Demultiplexteil bilden.

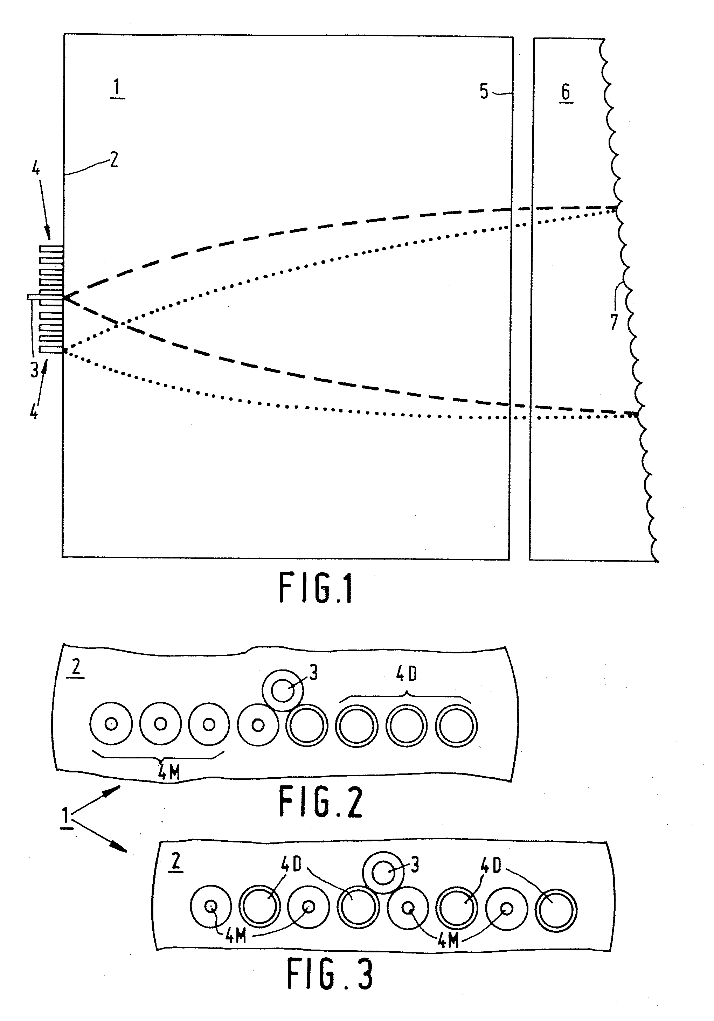

Eine Gruppierung der anzuschließenden LWL ist in Figur 2 näher herausgezeichnet, in der entsprechende Teile mit den gleichen Bezugszeichen versehen und daher nicht wiederholt beschrieben sind. Zur weiteren Optimierung werden als Lichtwellenleiter 4M des Multiplexteiles solche ausgewählt, die einen kleineren Kerndurchmesser und/oder kleinere numerische Apertur besitzen als die Eingangsfaser, während die Lichtwellenleiter 4 D des Demultiplexteiles größere Kerndurchmesser und/oder größere numerische Apertur besitzen. Die optische Achse der GRIN-Linse durchstößt die Dreiecksfläche, an dessen Ecken der LWL 3 und seine benachbarten LWL 4 M, 4 D angekoppelt sind. Dadurch wird der zur Verfügung stehenden Wellenlängenbereich vollständig genutzt.

In einer weiteren Ausgestaltung werden LWL 4 M, 4 D alternativ hintereinander angeordnet, Dabei durchdringen sich der Multiplex- und der Demultiplexteil gegenseitig (Fig. 3).

Für einen derartigen 10-kanaligen kombinierten Multiplexer und Demultiplexer bilden sich zwei Kanalgruppen mit den zentralen Wellenlängen 782, 807, 832 857 und 881 für den Multiplexteil und den zentralen
Wellenlängen 794, 819, 844, 867 und 893 nm für den
Demultiplexteil.

Es ist ohne weiteres möglich, einen derart kombinierten Multiplexer und Demultiplexer für andere
Wellenlängenbereiche, beispielsweise 1300 nm umzugestalten.

Philips Patentverwaltung GmbH          PHD 83383 EP
N.V. Philips' Gloeilampenfabrieken     86.82.1984

Ansprüche

1. Optischer Multiplexer und Demultiplexer, dadurch gekennzeichnet, daß für den Zweirichtungsbetrieb sowohl die ankommenden Lichtwellenleiter für einen Multiplexbetrieb als auch
die abgehenden Lichtwellenleiter für einen Demultiplexerbetrieb auf einer Stirnfläche einer
einzigen Gradienten-Index-Stablinse angeordnet
sind, daß auf dem Zentrum dieser Stirnfläche
ein in beiden Richtungen betriebener Lichtwellenleiter befestigt ist und daß der anderen
Stirnfläche mindestens ein Gitter zugeordnet
ist.

2. Optischer Multiplexer und Demultiplexer nach
Anspruch 1, dadurch gekennzeichnet, daß die ankommenden und die abgehenden Lichtwellenleiter
auf den beiden Seiten des Zentrums in einer
Reihe senkrecht zu den Linien des Gitters angeordnet sind.

3. Optischer Multiplexer und Demultiplexer nach
Anspruch 1 oder 2, dadurch gekennzeichnet, daß
ankommende und abgehende Lichtwellenleiter
gruppenweise hintereinander in einer Linie angeordnet sind.

4. Optischer Multiplexer und Demultiplexer nach Anspruch 1 oder 2, dadurch gekennzeichnet, daß ankommende und abgehende Lichtwellenleiter in alternativem Wechsel hintereinander angeordnet sind.

5. Optischer Multiplexer und Demultiplexer nach einem der Ansprüche 1 bis 4, dadurch gekennzeichnet, daß die ankommenden Lichtwellenleiter des Multiplexers und die abgehenden Lichtwellenleiter des Demultiplexers gleiche Außendurchmesser, jedoch verschiedene Kerndurchmesser bzw. numerische Aperturen besitzen.

6. Optischer Multiplexer und Demultiplexer nach Anspruch 5, dadurch gekennzeichnet, daß lichteinbringende Lichtwellenleiter kleinere Kerndurchmesser bzw. kleinere numerische Apertur haben als lichtaufnehmende Lichtwellenleiter.

7. Optischer Multiplexer und Demultiplexer nach einer der vorhergehenden Ansprüche, dadurch gekennzeichnet, daß das Gitter auf einem ersten keilförmigen Körper befestigt ist, der über einen zweiten keilförmigen Körper mit der Stirnfläche der Gradienten-Index-Stablinse befestigt ist.

8. Optischer Multiplexer und Demultiplexer nach einem der vorhergehenden Ansprüche, dadurch gekennzeichnet, daß sowohl der in beiden Richtungen betriebene Lichtwellenleiter als auch die Lichtwellenleiter versetzt zum Zentrum angeordnet sind.

0123332

FIG.1

FIG.2

FIG.3

PHD 83-303